# FASCICULE DE BREVET EUROPEEN

(11) **EP 1 802 077 B1**
(45) Date de publication et mention de la délivrance du brevet: **18.02.2009**
(21) Numéro de dépôt: 06292029.3
(22) Date de dépôt: 22.12.2006
(51) Int. Cl.: H04L 29/06

(54) **Procédé de répartition d'une fonction dans un réseau de pairs, et station d'un tel réseau**
Verteilungsverfahren einer Funktion in einem Netzwerk gleichrangiger Knoten und Knoten solch eines Neztwerks
Method of distributing a function in a network of peers and node of such a network

(30) Priorité: 23.12.2005 FR 0513272
(43) Date de publication de la demande: 27.06.2007
(73) Titulaire: France Télécom, 75015 Paris (FR)
(72) Inventeur: Neveux, Didier, 22140 Cavan (FR); Le Merrer, Erwan, 22730 Tregastel (FR)
(74) Mandataire: Loisel, Bertrand

(56) Documents cités:
- EP-A- 1 517 488
- WO-A-20/05107218
- SINGH K ET AL: "Peer-to-Peer Internet Telephony using SIP" INTERNET CITATION, [Online] 31 octobre 2004 (2004-10-31), XP002336408 Extrait de l'Internet: URL:http://www1.cs.columbia.edu/ library/TR-repository/reports/reports-20 04/cucs-044-04.pdf> [extrait le 2005-07-18]
- BASET S A ET AL: "An Analysis of the Skype Peer-to-Peer Internet Telephony Protocol" INTERNET CITATION, [Online] 15 septembre 2005 (2005-09-15), XP002336407 Extrait de l'Internet: URL:http//www1.cs.columbia.edu/ salman/publications/cucs-039-04.pdf> [extrait le 2005-07-18]

## Description

La présente invention concerne un procédé de répartition d'une fonction dans un réseau de pairs et une station appartenant à un tel réseau.

Dans l'acception la plus commune, un réseau de pairs (Peer-to-Peer (P2P) network en anglais) se caractérise par un ensemble de stations interconnectées de façon à permettre l'échange de fichiers de telle sorte que le chargement d'un fichier par un membre du réseau se fait par téléchargement à partir d'autres stations de ce réseau. Elle concerne également une station membre de ce réseau de pairs et un produit programme pour mettre en oeuvre le procédé.

L'usage de réseaux de pairs ne se limite pas au seul téléchargement. Ils sont également utilisés pour répartir des charges de calcul ou pour assurer des services de télécommunication, tels que, par exemple, des services de téléphonie sur IP comme les propose la Société Skype.

Dans un réseau de pairs, l'établissement d'une connexion peut se définir par le nombre de transferts, ou sauts, qu'une demande, initialisée par un membre, doit effectuer parmi les membres du réseau pour atteindre un membre capable d'assurer une réponse à cette demande.

On conçoit aisément que le réseau de pairs est d'autant plus efficace qu'une demande a moins de sauts à réaliser pour obtenir une réponse.

Un des avantages d'un tel réseau est de permettre de répartir la charge liée à une demande de chargement d'un fichier à partir d'un nombre important de stations de travail au lieu d'être limité à la capacité d'un serveur comme dans un chargement FTP (File Transfer Protocol - Protocole de Transfert de Fichier).

On appellera par la suite « fonction » un fichier d'un réseau de pairs destiné à être réparti parmi les membres du réseau pour assurer le fonctionnement du réseau.

Le fichier en question peut être un fichier de données. C'est ainsi que sont en train de se développer des réseaux de téléchargement d'oeuvres multimédia protégées par DRM (Digital Rights Management - gestion numérique des droits d'auteur) pour offrir, par exemple, des services de vidéo à la demande (Video On Demand, VoD).

Le fichier peut également être un fichier exécutable. Ainsi, les réseaux de téléphonie sur protocole Internet (VoIP) utilisant le protocole SIP (Session Initiation Protocol - protocole d'initialisation de session) utilisent des fonctions de type Proxy SIP qui sont réparties parmi les utilisateurs et qui servent à initialiser une session de téléphonie. Dans ce cas, l'objectif visé peut ne pas être le téléchargement mais l'exécution de fichier exécutable.

Or, classiquement, un réseau de pairs décentralisé n'a pas de méthode pour répartir harmonieusement une fonction. La répartition est fonction de l'historique d'utilisation de la fonction dans le réseau. Ainsi, des zones du réseau ont une densité importante de membres ayant la fonction alors que d'autres zones ont une densité faible créant ainsi des pertes d'efficacité liée à la saturation des stations détenant la fonction ou au nombre de sauts à effectuer pour l'atteindre.

Le but de l'invention est donc de remédier à cet inconvénient par un mécanisme qui permette une répartition homogène de la fonction.

Le document SINGH K ET AL: «Peer-to-Peer Internet Telephony using SIP», 31 octobre 2004, XP002336408, extrait le 2005-07-18 de l'Internet: URL:http://www1.cs.columbia.edu/library/TR-repository/reports/reports-20 04/cucs-044-04.pdf décrit un procédé de téléphonie Internet utilisant un réseau de pairs dans lequel les fonctions sont réparties.

L'objet de l'invention est un procédé de répartition selon la revendication 1.

L'utilisation d'un paramètre prédéterminé définissant un nombre maximal de sauts permet ainsi avantageusement une répartition uniforme de la fonction et ceci, en gardant la notion de gestion décentralisée qui est au coeur de réseaux de pairs. En effet, cet effet macroscopique, au niveau du réseau, de répartition homogène de la fonction est assuré par le comportement individuel de chaque station grâce à ce paramètre, et par une analyse locale, faite par la station, de son environnement.

D'autres caractéristiques sont énoncées dans les revendications 2 à 6.

Ainsi, avantageusement, la fonction est répartie régulièrement sans surcharge du réseau.

De plus, les étapes de mise à disposition ou de suppression de celle-ci s'effectuant sur des rythmes aléatoires, le risque de créer des oscillations est supprimé.

Avantageusement, la désactivation de la fonction permet de gérer la répartition de la fonction en minimisant les étapes de téléchargement consommatrices de temps et de bande passante.

Un autre objet est une station selon la revendication 7.

D'autres caractéristiques sont énoncées dans les revendications 8 à 10.

Un autre objet est un produit programme d'ordinateur selon la revendication 11.

L'invention sera mieux comprise à la lecture de la description qui va suivre, faite uniquement à titre d'exemple, et en relation avec les dessins en annexe dans lesquels :
- la figure 1 est une vue schématique d'un réseau de pairs ;
- la figure 2 est un ordinogramme d'un procédé de répartition d'une fonction dans le réseau de pairs de la figure 1 selon un mode de réalisation de l'invention ;
- la figure 3 est un ordinogramme d'une étape particulière du procédé de répartition dans le réseau de pairs de la figure 1 selon un autre mode de réalisation de l'invention ; et
- la figure 4 est une vue schématique d'une station, membre du réseau de pairs de la figure 1.

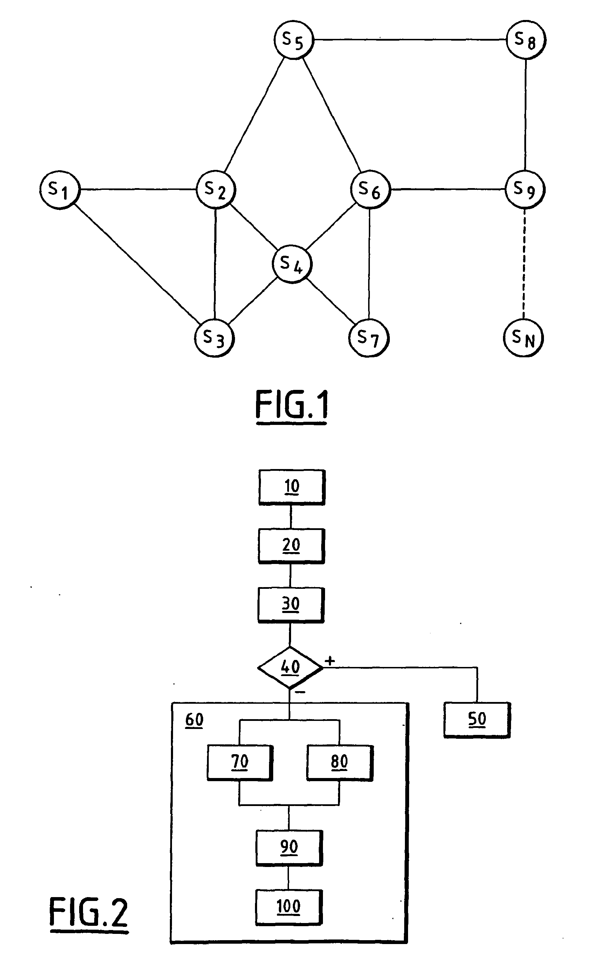

En référence à la figure 1, un réseau de pairs comporte un ensemble de stations S₁, S₂... S_{N} interconnectées. Par exemple, la station S₁, membre du réseau, est connectée aux stations S₂ et S₃. La connexion entre les stations S₁,... S_{N} est classiquement une liaison numérique du type Internet.

Une station particulière, S₈ par exemple, sert de serveur d'amorçage. Cette station S₈ sert ainsi au gestionnaire du réseau pour introduire dans celui-ci une nouvelle fonction et donc, pour amorcer la diffusion de la fonction dans le réseau.

A titre d'exemple, le serveur d'amorçage S₈ peut être réalisé sous la forme d'une station du réseau de pairs classique dont l'adresse est connue de tous les membres du réseau.

Le fonctionnement du réseau de pairs va maintenant être explicité en référence à figure 2.

Dans une étape préliminaire 10, le gestionnaire du réseau détermine la densité objective de la fonction à diffuser dans le réseau.

Par densité, on entend le nombre de sauts maximal que doit effectuer n'importe quelle station du réseau de pairs pour atteindre la fonction.

Cette densité est définie par le gestionnaire de réseau S₈, par exemple, en fonction des statistiques d'utilisation du service offert et des capacités moyennes d'une station à traiter des « sessions » simultanées.

Cette densité objective est donc un paramètre prédéterminé définissant un nombre maximal de sauts. Ce paramètre est diffusé en 20 à toutes les stations S₁, S₂, ... S_{N} du réseau de pairs en tant que paramètre de fonctionnement du réseau.

A l'étape 30, une station membre du réseau, par exemple S₃, recherche la présence de la fonction dans son voisinage, c'est-à-dire, par définition, parmi les membres du réseau de pairs se trouvant à au plus le paramètre prédéterminé de sauts.

A titre d'exemple, en supposant le paramètre prédéterminé de sauts égal à 2, le voisinage de la station S₃ dans le réseau de la figure 1, comporte les stations S₁, S₂ et S₄ qui se trouvent à 1 saut de S₃ et les stations S₅, S₆ et S₇ qui se trouvent à 2 sauts de S₃.

La méthode de recherche utilise des techniques classiques connues de l'homme du métier comme les algorithmes de marche aléatoire ou de flooding.

Si le résultat de la recherche, étape 40, est positif, c'est-à-dire que la fonction se trouve chez un membre du voisinage, alors la station conserve en 50 l'adresse de la station possédant la fonction pour une utilisation ultérieure éventuelle.

Si la recherche est négative, c'est-à-dire qu'aucun membre du voisinage ne possède la fonction, et que la station n'a pas déjà stocké la fonction, alors la station lance en 60 une opération d'acquisition de la fonction.

Cette opération d'acquisition de la fonction comporte une étape 70 de recherche généralisée de la fonction, c'est-à-dire une recherche sans limitation du nombre de sauts, sur l'ensemble du réseau de pairs.

Alternativement, la recherche généralisée est remplacée par connexion en 80 au serveur d'amorçage S₈.

La fonction est alors téléchargée en 90 sur la station, puis mis à disposition en 100 pour les autres membres du réseau de pairs.

A partir de cet instant, la station assure la mise à disposition de la fonction pour les stations de son voisinage.

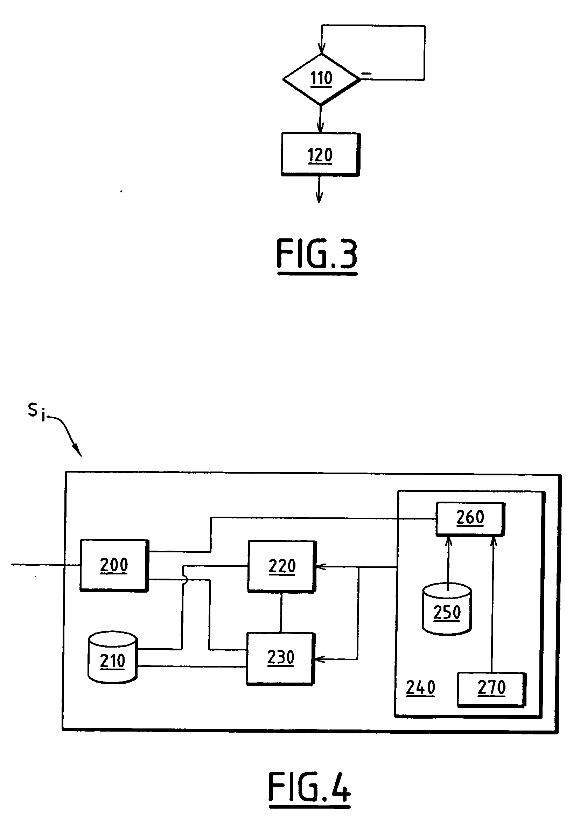

Dans un mode de réalisation préféré de l'invention, figure 3, chaque station possédant et mettant à disposition la fonction F vérifie en 110 selon un rythme aléatoire et borné qu'aucune autre station du voisinage ne mette également à disposition la fonction F

Si la station constate q'une autre station du voisinage met la fonction F à disposition, elle exécute en 120 une opération de perte de fonctionnalité.

Cela permet avantageusement de respecter la densité définie et de ne pas utiliser inutilement des ressources matérielles.

Cette opération de perte de fonctionnalité s'effectue, de préférence, de manière progressive. De façon préférentielle, la station ne répond plus aux nouvelles requêtes émanant de station sollicitant sa fonctionnalité mais conserve « en veille » la fonction F de façon à terminer proprement les services en cours. La station peut également rediriger les stations sollicitantes vers la station offrant la fonction F.

Chaque station décidant indépendamment, en fonction des informations reçues de son voisinage, d'acquérir ou de perdre la fonction F, un risque existe de créer un phénomène oscillatoire d'acquisition et de perte entre deux ou plusieurs stations. Par exemple, deux stations se trouvant dans le voisinage l'une de l'autre constatent en même temps que la fonction n'est pas disponible et exécutent donc l'opération d'acquisition. Si le délai de vérification des deux stations est similaire, chacune constate qu'une autre station du voisinage met à disposition la fonction et exécute l'opération de suppression et donc la fonction F n'est plus disponible dans le voisinage de ces stations, ce qui va enclencher une nouvelle opération d'acquisition,...

Pour éviter ces phénomènes oscillatoires, le délai de vérification est aléatoire à l'intérieur d'une plage de temps déterminée. Ainsi, en reprenant l'exemple ci-dessus, l'une des stations détecte le doublon de la fonction avec l'autre et engage l'opération de suppression. Lorsque la seconde station lance l'opération de vérification, elle constate ainsi qu'elle est la seule à posséder la fonction pour le voisinage.

Le rythme aléatoire de la vérification peut avantageusement s'accompagner d'un délai également aléatoire avant l'exécution de l'opération de suppression avec le même objectif de suppression des phénomènes oscillatoires d'acquisition/suppression.

Dans une variante préférée du procédé, la suppression de la fonction consiste en une simple désactivation de la fonction sans suppression physique du fichier correspondant à la fonction des moyens de stockage de la station. Ainsi, l'étape d'acquisition n'est plus nécessaire, l'étape de mise à disposition consistant alors simplement à réactiver la fonctionnalité, c'est-à-dire la mise à disposition de la fonction auprès des autres membres du réseau. Cela permet avantageusement de limiter les étapes de téléchargement consommatrices de temps et de bande passante.

Ainsi une station appartenant à un réseau de pairs comme décrit ci-dessus comporte, figure 4, des moyens 200 de communication avec les autres membres du réseau de pairs et des moyens 210 de stockage de la fonction.

Elle comporte également des moyens 220 d'acquisition et des moyens 230 de mise à disposition de cette fonction, moyens connectés aux moyens 200 de communication et aux moyens 210 de stockage, ainsi que des moyens 240 de pilotage des moyens d'acquisition et de mise à disposition.

Ces moyens 240 de pilotage comportent des moyens 250 de stockage du paramètre prédéterminé définissant le nombre maximal de sauts. Ils comportent en outre des moyens 260 de recherche de la fonction auprès des autres membres du réseau de pairs se trouvant à au plus la valeur prédéterminée de sauts, c'est-à-dire dans le voisinage de la station comme expliqué ci-dessus.

Ces moyens 240 de pilotage sont adaptés pour activer les moyens de recherche, puis, si le résultat de la recherche est négatif, activer les moyens d'acquisition et de mise à disposition.

De plus, dans un mode préférentiel de réalisation, les moyens de pilotage comportent des moyens 270 de génération de délais adaptés pour activer les moyens de recherche selon un rythme aléatoire et borné. Et les moyens de pilotage sont adaptés pour désactiver les moyens de mise à disposition lorsque les moyens de recherche ont trouvé que la fonction est mise à disposition par un des autres membres du voisinage.

On comprend que la station ainsi décrite est réalisable sous la forme d'un ordinateur de tout type commandé par les instructions de code d'un programme d'ordinateur. Et que ce programme d'ordinateur peut être stocké dans ou transmis par un support de données. Celui-ci est un support matériel de stockage, par exemple un CD-ROM, une disquette magnétique ou un disque dur, ou bien un support transmissible tel qu'un signal électrique, optique ou radioélectrique.

## Revendications

1. Procédé de répartition d'une fonction dans un réseau de pairs (S₂,...S_{N}), **caractérisé en ce que** ledit réseau comportant un paramètre prédéterminé définissant un nombre maximal de sauts, ledit procédé comporte les étapes :
- recherche (30) de la fonction par une première station membre du réseau de pairs, auprès des autres stations membres du réseau de pairs se trouvant à au plus le paramètre prédéterminé de sauts, et
- si la fonction n'est disponible (40) auprès d'aucune de ces dites stations membres se trouvant à au plus le paramètre prédéterminé de sauts,
• mise à disposition (100) de la fonction par la première station membre aux autres stations membres du réseau de pairs,
- vérification lorsque la première station membre met à disposition la fonction qu'aucune autre station membre se trouvant à au plus le paramètre prédéterminé de sauts ne met à disposition ladite fonction, et
si, lors de la vérification, ladite première station membre détecte qu'une telle autre station membre met à disposition ladite fonction, alors ladite première station membre supprime la mise à disposition de la fonction.

2. Procédé de répartition selon la revendication 1, **caractérisé en ce que**, préalablement à l'étape de mise à disposition (100), ledit procédé comporte une étape d'acquisition (60) de ladite fonction par ladite première station membre si ladite fonction n'est pas déjà stockée par ladite première station membre.

3. Procédé de répartition selon la revendication 2, **caractérisé en ce que** l'étape d'acquisition de la fonction comporte une première sous étape (70) de recherche de la fonction par la première station membre auprès de toutes les autres stations membres du réseau, sans limitation du nombre de sauts ou de connexion (80) de la première station membre à un serveur prédéterminé d'amorçage (58) du réseau, puis une seconde sous étape de chargement (90) de ladite fonction par ladite première station membre.

4. Procédé de répartition selon la revendication 1, 2 ou 3, **caractérisé en ce que** la vérification par la première station membre se fait selon un rythme aléatoire et borné.

5. Procédé de répartition selon la revendication 4, **caractérisé en ce que** ladite suppression de la mise à disposition de la fonction est effectuée après un délai aléatoire et borné.

6. Procédé de répartition selon la revendication 4 ou 5, **caractérisé en ce que** ladite suppression de la mise à disposition de la fonction consiste à la désactiver.

7. Station adaptée pour être utilisée dans un réseau de pairs comportant :
- des moyens (200) de communication avec des membres du réseau de pairs,
- des premiers moyens (210) de stockage d'au moins une fonction,
- des moyens (230) de mise à disposition de ladite fonction, moyens connectés aux moyens de communication et aux moyens de stockage,
- des moyens (240) de pilotage des moyens de mise à disposition,
**caractérisé, en ce que** lesdits moyens de pilotage comportent des seconds moyens (250) de stockage d'un paramètre prédéterminé définissant un nombre maximal de sauts et **en ce qu'**ils comportent en outre des moyens (260) de recherche de la fonction auprès des autres membres du réseau de pairs se trouvant à au plus la valeur prédéterminée de sauts, et lesdits moyens de pilotage étant adaptés pour activer les moyens de recherche, puis, si le résultat de la recherche est négatif, activer les moyens de mise à disposition.

8. Station selon la revendication 7, **caractérisée en ce qu'**elle comporte en outre des moyens d'acquisition (220) activés par les moyens de pilotage (240) si, le résultat de la recherche étant négative, la fonction n'est pas stockée dans les premiers moyens de stockage (210).

9. Station selon la revendication 8, **caractérisée en ce que** les moyens d'acquisition sont adaptés pour acquérir la fonction auprès de toute station membre du réseau de pairs, sans limitation du nombre de sauts, ou auprès d'un serveur prédéterminé d'amorçage.

10. Station selon l'une quelconque des revendications 7 à 9, **caractérisée en ce que** les moyens de pilotage comportent des moyens (270) de génération de délais adaptés pour activer les moyens de recherche selon un rythme aléatoire et borné, et **en ce que** les moyens de pilotage sont adaptés pour désactiver les moyens de mise à disposition lorsque les moyens de recherche ont trouvé que la fonction est mise à disposition par un desdits membres.

11. Produit programme d'ordinateur comprenant des instructions de code de programme pour l'exécution des étapes du procédé selon l'une quelconque des revendications 1 à 6 lorsque ledit programme est exécuté sur un ordinateur faisant office de station d'un réseau de pairs.

## Claims

1. Method of distributing a function in a peer-to-peer network (S₂,...S_{N}), **characterized in that** said network comprising a predetermined parameter defining a maximum number of hops, said method comprises the steps:
- searching (30) for the function by a first member station of the peer-to-peer network, at the other member stations of the peer-to-peer network situated at most the predetermined parameter of hops away, and
- if the function is not available (40) at any of these so-called member stations situated at most the predetermined parameter of hops away,
• provision (100) of the function by the first member station to the other member stations of the peer-to-peer network,
- verification when the first member station provides the function that no other member station situated at most the predetermined parameter of hops away provides said function, and
if, during verification, said first member station detects that some such other member station provides said function, then said first member station removes the provision of the function.

2. Distributing method according to Claim 1, **characterized in that**, prior to the provision step (100), said method comprises a step of acquiring (60) said function by said first member station if said function is not already stored by said first member station.

3. Distributing method according to Claim 2, **characterized in that** the step of acquiring the function comprises a first substep (70) of searching for the function by the first member station at all the other member stations of the network, without limitation of the number of hops or of connection (80) of the first member station to a predetermined boot server (58) of the network, then a second substep (90) of loading said function by said first member station.

4. Distributing method according to Claim 1, 2 or 3, **characterized in that** the verification by the first member station is done according to a random and bounded tempo.

5. Distributing method according to Claim 4, **characterized in that** said removal of the provision of the function is performed after a random and bounded interval.

6. Distributing method according to Claim 4 or 5, **characterized in that** said removal of the provision of the function consists in deactivating it.

7. Station adapted to be used in a peer-to-peer network comprising:
- means (200) for communicating with members of the peer-to-peer network,
- first means (210) for storing at least one function,
- means (230) for providing said function, means connected to the communication means and to the storage means,
- means (240) for driving the providing means, **characterized in that** said driving means comprise second means (250) for storing a predetermined parameter defining a maximum number of hops and **in that** they furthermore comprise means (260) for searching for the function at the other members of the peer-to-peer network situated at most the predetermined value of hops away, and said driving means being adapted for activating the searching means, then, if the result of the search is negative, activating the providing means.

8. Station according to Claim 7, **characterized in that** it furthermore comprises acquisition means (220) activated by the driving means (240) if, the result of the search being negative, the function is not stored in the first storage means (210).

9. Station according to Claim 8, **characterized in that** the acquisition means are adapted for acquiring the function at any member station of the peer-to-peer network, without limitation of the number of hops, or at a predetermined boot server.

10. Station according to any one of Claims 7 to 9, **characterized in that** the driving means comprise means (270) for generating intervals adapted for activating the searching means according to a random and bounded tempo, and **in that** the driving means are adapted for deactivating the providing means when the searching means have found that the function is provided by one of said members.

11. Computer program product comprising program code instructions for executing the steps of the method according to any one of Claims 1 to 6 when said program is executed on a computer acting as station of a peer-to-peer network.

## Patentansprüche

1. Verfahren zur Verteilung einer Funktion in einem Peer-to-Peer-Netzwerk (S₂, ..., S_{N}), **dadurch gekennzeichnet, dass**, wenn das Netzwerk einen vorbestimmten Parameter aufweist, der eine maximale Anzahl von Sprüngen definiert, das Verfahren die folgenden Schritte aufweist:
- Suche (30) der Funktion durch eine erste Mitgliedsstation des Peer-to-Peer-Netzwerks in den anderen Mitgliedsstationen des Peer-to-Peer-Netzwerks, die sich in höchstens dem vorbestimmten Parameter von Sprüngen befinden, und
- wenn die Funktion in keiner dieser Mitgliedsstationen, die sich in höchstens dem vorbestimmten Parameter von Sprüngen befinden, bereitgestellt ist (40),
• Bereitstellung (100) der Funktion durch die erste Mitgliedsstation für die anderen Mitgliedsstationen des Peer-to-Peer-Netzwerks,
- Überprüfung dass, wenn die erste Mitgliedsstation die Funktion bereitstellt, keine andere Mitgliedsstation, die sich in höchstens dem vorbestimmten Parameter von Sprüngen befindet, die Funktion bereitstellt, und
wenn bei der Überprüfung die erste Mitgliedsstation erfasst, dass eine solche andere Mitgliedsstation die Funktion bereitstellt, die erste Mitgliedsstation die Bereitstellung der Funktion unterdrückt.

2. Verteilungsverfahren nach Anspruch 1, **dadurch gekennzeichnet, dass** das Verfahren vor dem Schritt der Bereitstellung (100) einen Schritt der Erfassung (60) der Funktion durch die erste Mitgliedsstation aufweist, wenn die Funktion nicht bereits von der ersten Mitgliedsstation gespeichert ist.

3. Verteilungsverfahren nach Anspruch 2, **dadurch gekennzeichnet, dass** der Schritt der Erfassung der Funktion einen ersten Teilschritt (70) der Suche der Funktion durch die erste Mitgliedsstation bei allen anderen Mitgliedsstationen des Netzes ohne Begrenzung der Anzahl von Sprüngen oder der Verbindung (80) der ersten Mitgliedsstation mit einem vorbestimmten Bootserver (58) des Netzes, und dann einen zweiten Teilschritt des Ladens (90) der Funktion durch die erste Mitgliedsstation enthält.

4. Verteilungsverfahren nach Anspruch 1, 2 oder 3, **dadurch gekennzeichnet, dass** die Überprüfung durch die erste Mitgliedsstation gemäß einem zufälligen und begrenzten Takt erfolgt.

5. Verteilungsverfahren nach Anspruch 4, **dadurch gekennzeichnet, dass** die Unterdrückung der Bereitstellung der Funktion nach einer zufälligen und begrenzten Verzögerung erfolgt.

6. Verteilungsverfahren nach Anspruch 4 oder 5, **dadurch gekennzeichnet, dass** die Unterdrückung der Bereitstellung der Funktion darin besteht, sie zu deaktivieren.

7. Station, die geeignet ist, um in einem Peer-to-Peer-Netzwerk verwendet zu werden, die aufweist:
- Mittel (200) zur Kommunikation mit den Mitgliedern des Peer-to-Peer-Netzwerks,
- erste Mittel (210) zum Speichern mindestens einer Funktion,
- Mittel (230) zur Bereitstellung der Funktion, Mittel, die mit den Kommunikationsmitteln und mit den Speichermitteln verbunden sind,
- Mittel (240) zur Steuerung der Bereitstellungsmittel,
**dadurch gekennzeichnet, dass** die Steuermittel zweite Mittel (250) zum Speichern eines vorbestimmten Parameters aufweisen, der eine maximale Anzahl von Sprüngen definiert, und dass sie außerdem Mittel (260) zur Suche der Funktion in den anderen Mitgliedern des Peer-to-Peer-Netzwerks aufweist, die sich in höchstens dem vorbestimmten Wert von Sprüngen befinden, und die Steuermittel geeignet sind, um die Suchmittel zu aktivieren, und dann, wenn das Ergebnis der Suche negativ ist, die Bereitstellungsmittel zu aktivieren.

8. Station nach Anspruch 7, **dadurch gekennzeichnet, dass** sie außerdem Erfassungsmittel (220) aufweist, die von den Steuermitteln (240) aktiviert werden, wenn, da das Ergebnis der Suche negativ ist, die Funktion nicht in den ersten Speichermitteln (210) gespeichert ist.

9. Station nach Anspruch 8, **dadurch gekennzeichnet, dass** die Erfassungsmittel geeignet sind, um die Funktion in jeder Mitgliedsstation des Peer-to-Peer-Netzwerks, ohne Begrenzung der Anzahl von Sprüngen, oder in einem vorbestimmten Bootserver zu erfassen.

10. Station nach einem der Ansprüche 7 bis 9, **dadurch gekennzeichnet, dass** die Steuermittel Mittel (270) zur Erzeugung von Verzögerungen aufweisen, die geeignet sind, um die Suchmittel gemäß einem zufälligen und begrenzten Takt zu aktivieren, und dass die Steuermittel geeignet sind, um die Bereitstellungsmittel zu deaktivieren, wenn die Suchmittel gefunden haben, dass die Funktion von einem der Mitglieder zur Verfügung gestellt wird.

11. Computerprogrammprodukt, das Programmcodeanweisungen für die Durchführung der Schritte des Verfahrens nach einem der Ansprüche 1 bis 6 aufweist, wenn das Programm in einem Computer ausgeführt wird, der als Station eines Peer-to-Peer-Netzwerks dient.
